# FASCICULE DE BREVET EUROPEEN

(11) **EP 2 212 784 B1**
(45) Date de publication et mention de la délivrance du brevet: **30.05.2018**
(21) Numéro de dépôt: 08841500.5
(22) Date de dépôt: 13.10.2008
(51) Int. Cl.: G06F 9/54

(54) **SYSTEME ET PROCEDE D'ECHANGE D'INFORMATIONS DANS UN TERMINAL MULTIMEDIAS**
SYSTEM UND VERFAHREN ZUM AUSTAUSCH VON INFORMATIONEN IN EINEM MULTIMEDIAENDGERÄT
SYSTEM AND METHOD FOR EXCHANGING INFORMATION IN A MULTIMEDIA TERMINAL

(30) Priorité: 18.10.2007 FR 0707300
(43) Date de publication de la demande: 04.08.2010
(73) Titulaire: Orange, 75015 Paris (FR)
(72) Inventeur: AUVRAY, Vincent, F-50460 Tonneville (FR); DESFEUX, Guillaume, F-14000 Caen (FR)
(74) Mandataire: Cabinet Plasseraud
(86) Numéro de dépôt international: PCT/FR2008/051856
(87) Numéro de publication internationale: WO 2009/053641

(56) Documents cités:
- EP-A- 0 974 897
- EP-A- 1 113 361

## Description

La présente invention concerne les échanges de données dans des terminaux multimédias entre des applications dites natives, locales et distantes.

De manière générale, les terminaux multimédias comportent un certain nombre d'applications dites natives qui sont liées à l'exploitation des ressources du terminal. Par exemple, dans le cas d'un terminal de téléphonie, des applications natives sont les applications de connexion réseau, d'émission et de réception des appels ainsi que des applications de contrôle de l'écran ou de contrôle d'une interface utilisateur, telle qu'un clavier ou un écran tactile.

Par ailleurs, une fonctionnalité courante dans le domaine de l'Internet est l'utilisation d'applications exécutées au travers d'un logiciel de navigation Internet. Les applications de type « plug-in » JavaScript sont des exemples d'applications exécutées au travers d'un logiciel de navigation.

Ces applications sont soit des applications locales soit des applications distantes. Les applications locales sont téléchargées puis stockées localement dans le terminal. Les applications distantes sont stockées sur un serveur distant et exécutées uniquement dans la page Internet correspondante lors de son téléchargement. Il convient de noter que même si ces applications sont appelées « distantes », leur exécution est réalisée au niveau du terminal. Elles se distinguent toutefois des applications locales en ce qu'elles ne peuvent pas être exécutées en l'absence d'une connexion avec un équipement distant, contrairement aux applications locales qui peuvent être exécutées « hors connexion ».

Dans le domaine des terminaux multimédias, on considère que les applications natives, locales et distantes ont des contextes d'exécution différents. Pour des raisons de sécurité, les terminaux incorporent des barrières logiques réduisant la perméabilité entre des applications dans des contextes d'exécution différents.

Ainsi, un événement correspondant à la mise en oeuvre d'une application dans un contexte d'exécution particulier n'est pas relayé dans les autres contextes d'exécution.

Par exemple, une application distante ne peut pas contrôler le réglage de l'intensité de l'écran, ni déclencher l'émission d'appels et une application locale ne peut pas communiquer avec une application distante.

Toutefois, un nombre croissant de terminaux permet aujourd'hui l'accès à des ressources de type Internet et il est intéressant de pouvoir exploiter facilement et directement des données ou informations liées aux applications distantes au niveau des applications natives ou locales et réciproquement.

En effet, aujourd'hui, un utilisateur ne peut pas stocker des numéros de téléphone sur un répertoire Internet et accéder à ce répertoire Internet grâce à l'exécution d'une application locale ou bien encore exécuter l'appel à l'aide d'une application native.

Des exemples et des modes de réalisations possibles de l'art antérieur sont décrit dans le document EP 1 113 361 A et EP 0 974 897 A.

Un avantage de la présente invention est de permettre une plus grande perméabilité et une meilleure intégration entre les applications natives, locales et distantes.

A cet effet, un des objets de la présente invention est un système d'échange de données pour un terminal multimédias, ledit terminal comprenant des applications natives exécutables directement par le terminal et des applications locales ainsi que distantes exécutables au travers d'un logiciel de navigation Internet, caractérisé en ce que le système comprend un module de détection du fonctionnement d'applications exécutables au travers d'un logiciel de navigation Internet, une première interface d'échange de données entre les applications locales et les applications natives et une seconde interface d'échange de données entre les applications natives et les applications locales, ledit module de détection et lesdites première et seconde interfaces étant adaptés pour échanger des données.

Ainsi, les transferts de données entre le module de détection et les deux 30 interfaces permettent d'exploiter des informations d'un domaine d'exécution à l'autre.

Avantageusement, le module de détection est adapté pour relayer des informations relatives au fonctionnement d'applications exécutables au travers d'un logiciel de navigation Internet vers ladite première interface, ladite première interface est adaptée pour relayer des informations relatives au fonctionnement d'applications distantes vers ladite seconde interface et des informations relatives au fonctionnement d'applications locales vers des applications natives et ladite seconde interface est adaptée pour relayer des informations provenant de ladite première interface vers des applications locales.

Ainsi, les informations résultant de l'exécution de l'application distante sont transformées en des informations résultant de l'exécution de l'application locale tout en assurant une bonne synchronisation entre les applications locales et natives.

Dans un mode de réalisation particulier, lesdites première et seconde interfaces sont adaptées pour convertir les informations entre un premier langage informatique utilisé par lesdites applications natives et un second langage informatique utilisé par lesdites applications exécutables au travers d'un logiciel Internet.

Dans un mode de réalisation particulier, le système comprend une application native de notification adaptée pour interroger périodiquement un serveur distant et transmettre les informations obtenues à une application native et/ou à une application locale via ladite seconde interface d'échange de données.

Ainsi, des informations issues d'un serveur distant peuvent être utilisées au niveau d'applications natives et/ou locales du terminal.

Dans encore un autre mode de réalisation, le système comprend une application native de notification adaptée pour transmettre périodiquement des informations relatives au fonctionnement des applications natives et/ou locales à un serveur distant et au moins une application distante du terminal est adaptée pour obtenir ces informations du serveur distant.

Un tel mode de réalisation permet d'exploiter dans une application distante des informations issues d'applications locales et/ou natives, c'est-à-dire de transformer des informations issues des applications locales et/ou natives en des informations issues des applications distantes.

Par ailleurs, un autre objet de l'invention est un procédé d'échange de données dans un terminal multimédias entre des applications natives exécutables directement par le terminal et des applications locales ainsi que distantes exécutables au travers d'un logiciel de navigation Internet, caractérisé en ce qu'il comprend une transmission d'informations relatives au fonctionnement d'une application distante vers une première interface d'échange de données entre les applications locales et les applications natives, une transmission de ces informations vers une seconde interface d'échange de données entre les applications natives et les applications locales, une transmission de ces informations par ladite seconde interface vers une application locale, une exécution de l'application locale à l'aide desdites informations, une transmission d'informations relatives au fonctionnement de ladite application locale vers ladite première interface et une transmission desdites informations vers une application native par ladite première interface.

Dans une variante, le procédé comprend en outre une détection du fonctionnement d'applications exécutables au travers d'un logiciel de navigation Internet en vue de la transmission vers ladite première interface d'informations relatives au fonctionnement d'applications distantes et à l'exécution d'applications locales.

Dans encore une autre variante du procédé, lesdites transmissions d'informations entre les applications natives et les applications exécutables au travers d'un logiciel de navigation comportent des conversions entre un premier langage informatique utilisé par les applications natives et un second langage informatique utilisé par les applications exécutables au travers d'un logiciel de navigation.

Dans une autre variante, le procédé comporte en outre une émission, par une application native, d'une requête d'interrogation d'un serveur distant, une obtention d'informations en retour, et une transmission de ces informations à une application native et/ou à une application locale par le biais de la seconde interface.

Enfin, dans une autre variante, le procédé comporte en outre une transmission, vers un serveur distant et par une application native, d'informations relatives au fonctionnement des applications natives et/ou locales et une obtention de ces informations par une application distante.

L'invention a également pour objet un programme d'ordinateur comprenant des instructions de codes lesquelles, lorsqu'elles sont exécutées par un microprocesseur ou un microcontrôleur d'un terminal multimédias, entraînent un échange de données entre des applications locales ainsi que distantes et des applications natives du terminal et un échange de données entre des applications natives du terminal et des applications locales ainsi que distantes selon le procédé décrit précédemment.

D'autres particularités et avantages de la présente invention apparaîtront dans la description faite ci-après à titre non limitatif et en référence aux dessins annexés dans lesquels :
- la figure 1 est un schéma de l'architecture logicielle de l'invention ; et
- la figure 2 est un organigramme d'un mode d'utilisation particulier de l'invention.

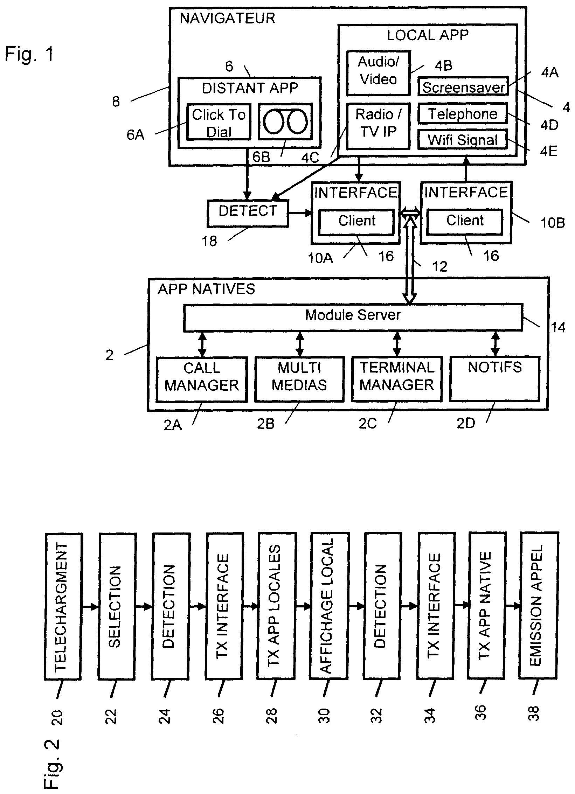

La figure 1 représente l'architecture logicielle d'un terminal selon l'invention. Cette architecture logicielle se divise en trois parties avec des applications natives 2, des applications locales 4 et des applications distantes 6. Les applications locales 4 et distantes 6 sont exécutées dans un logiciel de navigation Internet 8.

Les applications natives, également appelées binaires, sont exécutables directement par le terminal multimédias. On entend par là que ces applications correspondent à des codes sources stockés dans des mémoires du terminal, et qu'elles sont exécutées directement par le microprocesseur. Dans l'exemple, ces applications fonctionnent selon le langage informatique appelé C++.

Dans l'exemple, les applications natives sont regroupées en quatre catégories respectivement 2A, 2B, 2C et 2D. La catégorie 2A correspond aux applications de téléphonie telles que par exemple la gestion des appels (Call manager) et la commande des appels (Click to dial). La catégorie 2B correspond aux applications multimédias et notamment aux applications d'écran de veille ("screensaver"), de gestion audio vidéo locale (AN local) et de gestion audio vidéo en flux passant (A/V streaming). La catégorie 2C correspond aux applications relatives à la gestion du terminal et notamment aux mises à jour de logiciels, au démarrage rapide et aux connexions au réseau sans fil. La catégorie 2D correspond aux applications liées aux échanges de notifications avec des serveurs distants tels que des serveurs de messagerie.

Ces catégories ainsi que les applications listées ci-dessus sont classiques dans les terminaux multimédias existants.

Par ailleurs, les applications locales 6 comprennent des applications de type JavaScript permettant, dans l'exemple, l'exécution d'écrans de veille 4A, l'exécution de fonctions audio vidéo 4B, la réception 4C de flux de radio ou de télévision selon le protocole IP, l'exécution de fonctions de téléphonie 4D ou encore l'exécution de fonctions de connexion à des réseaux sans fil 4E.

En outre, l'architecture logicielle comprend les applications distantes 6A et 6B permettant respectivement, au travers d'une page Internet, de composer un numéro de téléphone et d'accéder à une messagerie.

Dans le mode de réalisation décrit, l'architecture logicielle comprend en outre deux interfaces 10A et 10B. L'interface 10A permet une communication dite descendante entre les applications exécutées dans le navigateur Internet 8 et les applications exécutées dans le terminal. Plus précisément, dans le mode de réalisation décrit, cette interface 10A permet de relayer des informations entre les applications locales 4 et les applications natives 2. Dans l'exemple, cette interface 10A est adaptée pour convertir des messages de type Javascript en des messages en langage C++.

L'interface 10B permet une communication dite montante entre les applications natives 2 et les applications locales 4. Dans l'exemple, cette interface convertit les informations émises en langage C++ en langage Javascript.

Par ailleurs, les interfaces 10A et 10B sont adaptées pour communiquer directement entre elles. Notamment, l'interface 10A est adaptée pour relayer des informations émanant des applications distantes vers l'interface 10B. Les interfaces 10A et 10B communiquent également avec les applications natives 2 par l'utilisation d'un bus logiciel 12. Dans l'exemple, ce bus comprend un module serveur 14 au niveau des applications natives et un module client 16 dans chaque interface.

L'utilisation d'une communication directe entre les interfaces 10A et 10B permet d'accroître les performances et d'obtenir des échanges d'informations plus rapides, notamment pour les informations vidéos.

Enfin, l'architecture logicielle comprend un module 18 de détection des événements résultant de la mise en oeuvre des applications exécutables au travers d'un logiciel de navigation Internet. Ce module de détection 18 relaye des informations relatives au fonctionnement des applications locales 4 et distantes 6 vers l'interface 10A.

En référence à la figure 2, on va maintenant décrire un exemple de fonctionnement dans le cadre d'un accès à un répertoire distant contenant des numéros de téléphone.

À l'aide de son terminal et des applications Internet classiques, un utilisateur se connecte à un serveur distant et accède à une page stockée sur Internet.

Cette page est téléchargée lors d'une étape 20. La page contient une application distante qui permet l'accès à la base de données localisée sur le serveur distant comportant les numéros de téléphone. Cette page comporte également l'application distante 6A visant à l'émission d'un appel.

Au cours d'une étape 22, l'utilisateur sélectionne un contact dans la fenêtre d'affichage du carnet d'adresses et déclenche l'appel, par exemple en validant une icône correspondante. La commande JavaScript contenue dans l'icône d'appel est exécutée par le logiciel de navigation.

L'exécution de cette fonction 6A dans le navigateur est détectée par le module 18 lors d'une étape 24. Lors d'une étape 26, les informations relatives à l'événement détecté sont transmises à l'interface 10A qui les relaye à l'interface 10B. Ainsi, le message émis par l'application distante 6A est récupéré de même que les paramètres associés, dont le numéro de téléphone.

Ensuite, l'interface 10B commande l'application locale vidéo 4B dans la page Internet lors d'une étape 28. Plus précisément, une commande est émise par l'interface 10B et contient une instruction javascript qui est exécutée par l'application locale vidéo 4B. Ceci permet d'afficher une information de retour vers l'utilisateur signifiant que l'appel est en cours lors d'une étape 30.

L'exécution de cette commande javascript par l'application locale 4B est détectée à nouveau par le module 18 lors d'une étape 32. Cette information est transmise à l'interface 10A lors d'une étape 34 puis relayée par l'interface 10A vers les applications natives lors d'une étape 36.

La transmission des informations vers l'application native 2A entraîne la réalisation d'un appel lors d'une étape 38. Le numéro de téléphone à composer a été transmis avec le message en tant que paramètre.

Ainsi, grâce à la correspondance entre les commandes émises par les interfaces, les informations d'un domaine d'exécution sont utilisées dans un autre. Plus précisément, les informations issues du fonctionnement de l'application distante sont transformées en des informations issues du fonctionnement d'une application locale afin d'être relayées au niveau des applications natives.

Par ailleurs, dans l'exemple décrit en référence à la figure 1, l'architecture logicielle comprend également une application native de notification 2D. Cette application gère des échanges d'informations entre un ou plusieurs serveurs distants et le terminal.

Par exemple, cette application de notification interroge périodiquement un serveur distant, tel qu'un serveur de messagerie vocale ou de messagerie électronique. L'application reçoit en retour une information de statut qui est remontée vers l'utilisateur. A cet effet, l'information de statut est transmise à l'interface 10B. L'information est ensuite transmise à une application locale, telle que par exemple une application d'affichage d'un indicateur de statut de la messagerie. Alternativement, cette information est directement transmise à une autre application native.

En outre, l'application de notification 2D transmet également des informations relatives au fonctionnement des applications locales et/ou natives à un serveur distant. Ce sont par exemple des informations de journal indiquant les appels émis, les appels reçus ou encore les appels manqués. Ces informations issues d'applications natives ou locales sont ensuite accessibles pour les applications distantes 6. Ainsi, des informations issues d'applications natives et/ou locales sont transformées en des informations issues d'applications distantes. Ces informations redeviennent utilisables au niveau du terminal par le biais du mécanisme d'échange de données décrit en référence à la figure 2.

Bien entendu, d'autre particularités et variantes peuvent être envisagées. Notamment, d'autres langages informatiques que les langages C++ et Javascript peuvent être utilisés.

En outre, certains modules logiciels peuvent être combinés pour remplir les mêmes fonctions au sein d'un même programme informatique. Notamment, les interfaces pour les communications montantes et descendantes peuvent être combinées en un seul logiciel de même que l'interface descendante et le module de détection.

Dans un autre mode de réalisation, l'exécution d'une application locale déclenche automatiquement la transmission d'informations vers une application native via l'interface 10A mais sans nécessiter l'utilisation du module de détection. Par exemple, le message transmis vers l'application locale par l'interface montante comprend une instruction déclenchant cette transmission.

Dans une autre variante encore, les informations converties par les interfaces 10A et 10B déclenchent simultanément l'émission de messages vers les applications locales et natives. Un tel mode de réalisation est particulièrement utile lorsque les applications locales et natives peuvent être mises en oeuvre séparément.

Il est également possible d'utiliser le bus de communication pour les échanges entre les interfaces.

## Revendications

1. Système d'échange de données pour un terminal multimédias, ledit terminal comprenant :
- des applications natives (2), exécutables directement par le terminal,
- des applications exécutables au travers d'un logiciel de navigation Internet (8) et comprenant:
- des applications locales (4) téléchargées et stockées localement dans le terminal pour être exécutables hors connexion,
- ainsi que des applications distantes (6) exécutables restrictivement en connexion avec un équipement distant,
**caractérisé en ce que** le système comprend :
- un module de détection (18) du fonctionnement d'une application (4, 6) exécutable au travers d'un logiciel de navigation Internet, en mode local pour une application locale (4), ou en mode distant pour une application distante (6),
- une première interface (10A) d'échange de données depuis les applications locales et vers les applications natives, et
- une seconde interface (10B) d'échange de données depuis les applications natives et vers les applications locales,
et **en ce que** ledit module de détection et lesdites première et seconde interfaces sont adaptés pour :
- une transmission (26) d'informations relatives au fonctionnement d'une application distante vers la première interface (10A);
- une transmission (26) de ces informations vers la seconde interface (10B);
- une transmission (28) de ces informations par ladite seconde interface vers une application locale ;
- une exécution (30) de l'application locale à l'aide desdites informations ;
- une transmission (34) d'informations relatives au fonctionnement de ladite application locale vers ladite première interface ; et
- une transmission (36) desdites informations vers une application native par ladite première interface.

2. Système selon la revendication 1, **caractérisé en ce que** le module de détection (18) est adapté pour relayer des informations relatives au fonctionnement d'applications exécutables au travers d'un logiciel de navigation Internet vers ladite première interface (10A), ladite première interface est adaptée pour relayer des informations relatives au fonctionnement d'applications distantes (6) vers ladite seconde interface (10B) et des informations relatives au fonctionnement d'applications locales (4) vers des applications natives (2) et ladite seconde interface est adaptée pour relayer des informations provenant de ladite première interface (10A) vers des applications locales (2).

3. Système selon l'une quelconque des revendications 1 et 2, **caractérisé en ce que** lesdites première et seconde interfaces (10A, 10B) sont adaptées pour convertir les informations entre un premier langage informatique utilisé par lesdites applications natives (2) et un second langage informatique utilisé par lesdites applications (4, 6) exécutables au travers d'un logiciel Internet.

4. Système selon l'une quelconque des revendications 1 à 3, **caractérisé en ce qu'**il comprend une application native de notification (2D) adaptée pour interroger périodiquement un serveur distant et transmettre les informations obtenues à une application native (2) et/ou à une application locale (4) via ladite seconde interface (10B) d'échange de données.

5. Système selon l'une quelconque des revendications 1 à 4, **caractérisé en ce qu'**il comprend une application native de notification (2D) adaptée pour transmettre périodiquement des informations relatives au fonctionnement des applications natives (2) et/ou locales (4) à un serveur distant et **en ce que** au moins une application distante (6) du terminal est adaptée pour obtenir ces informations du serveur distant.

6. Procédé d'échange de données dans un terminal multimédias entre :
- des applications natives (2) exécutables directement par le terminal,
- des applications exécutables au travers d'un logiciel de navigation Internet (8) et comprenant:
- des applications locales (4) téléchargées et stockées localement dans le terminal pour être exécutables hors connexion,
- ainsi que des applications distantes (6) exécutables restrictivement en connexion avec un équipement distant,
**caractérisé en ce qu'**il comprend :
- une détection (24) du fonctionnement d'une application distante ;
- une transmission (26) d'informations relatives au fonctionnement de l'application distante vers une première interface d'échange de données (10A) depuis les applications locales et vers les applications natives ;
- une transmission (26) de ces informations vers une seconde interface d'échange de données (10B) depuis les applications natives et vers les applications locales ;
- une transmission (28) de ces informations par ladite seconde interface vers une application locale ;
- une exécution (30) de l'application locale à l'aide desdites informations;
- une transmission (34) d'informations relatives au fonctionnement de ladite application locale vers ladite première interface; et
- une transmission (36) desdites informations vers une application native par ladite première interface.

7. Procédé selon la revendication 6, **caractérisé en ce qu'**il comprend en outre une détection (24, 32) du fonctionnement d'applications exécutables au travers d'un logiciel de navigation Internet en vue de la transmission vers ladite première interface d'informations relatives au fonctionnement d'applications distantes et à l'exécution d'applications locales.

8. Procédé selon l'une quelconque des revendications 6 et 7, **caractérisé en ce que** lesdites transmissions d'informations entre les applications natives et les applications exécutables au travers d'un logiciel de navigation comportent des conversions entre un premier langage informatique utilisé par les applications natives et un second langage informatique utilisé par les applications exécutables au travers d'un logiciel de navigation.

9. Procédé selon l'une quelconque des revendications 6 à 8, **caractérisé en ce qu'**il comporte en outre :
- une émission, par une application native (2D), d'une requête d'interrogation d'un serveur distant ;
- une obtention d'informations en retour ; et
- une transmission de ces informations à une application native (2) et/ou à
- une application locale (4) par le biais de ladite seconde interface (10B).

10. Procédé selon l'une quelconque des revendications 6 à 9, **caractérisé en ce qu'**il comporte en outre :
- une transmission, vers un serveur distant et par une application native (2D), d'informations relatives au fonctionnement des applications natives et/ou locales ; et
- une obtention de ces informations par une application distante (6).

11. Programme informatique comportant des instructions pour la mise en oeuvre du procédé selon l'une des revendications 6 à 10, lorsque ce programme est exécuté par un processeur.

## Patentansprüche

1. System zum Austausch von Daten für ein Multimediaendgerät, wobei das Endgerät Folgendes umfasst:
- native Anwendungen (2), die direkt von dem Endgerät ausführbar sind,
- Anwendungen, die durch eine Internet-Navigationssoftware (8) ausführbar sind und Folgendes umfassen:
- lokale Anwendungen (4), die heruntergeladen und lokal in dem Endgerät gespeichert sind, um offline ausführbar zu sein,
- sowie entfernte Anwendungen (6), die einschränkend in Verbindung mit einer entfernten Ausstattung ausführbar sind,
**dadurch gekennzeichnet, dass** das System Folgendes umfasst:
- ein Erfassungsmodul (18) des Betriebs einer Anwendung (4, 6), die über eine Internet-Navigationssoftware im lokalen Modus für eine lokale Anwendung (4) oder im entfernten Modus für eine entfernte Anwendung (6) ausführbar ist ,
- eine erste Schnittstelle (10A) zum Datenaustausch ausgehend von den lokalen Anwendungen und zu den nativen Anwendungen, und
- eine zweite Schnittstelle (10B) zum Datenaustausch ausgehend von den nativen Anwendungen und zu den lokalen Anwendungen,
und dass das Erfassungsmodul und die erste und zweite Schnittstelle angepasst sind für:
- eine Übertragung (26) von Informationen in Zusammenhang mit dem Betrieb von einer entfernten Anwendung zu der ersten Schnittstelle (10A);
- eine Übertragung (26) dieser Informationen zu der zweiten Schnittstelle (10B);
- eine Übertragung (28) dieser Informationen durch die zweite Schnittstelle zu einer lokalen Anwendung;
- eine Ausführung (30) der lokalen Anwendung mit Hilfe der Informationen;
- eine Übertragung (34) von Informationen in Zusammenhang mit dem Betrieb der lokalen Anwendung zu der ersten Schnittstelle, und
- eine Übertragung (36) der Informationen zu einer nativen Anwendung durch die erste Schnittstelle.

2. System nach Anspruch 1, **dadurch gekennzeichnet, dass** das Erfassungsmodul (18) angepasst ist, um Informationen in Zusammenhang mit dem Betrieb von Anwendungen, die durch eine Internet-Navigationssoftware ausführbar sind, zu der ersten Schnittstelle (10A) weiterzugeben, wobei die erste Schnittstelle angepasst ist, um Informationen in Zusammenhang mit dem Betrieb entfernter Anwendungen (6) zu der zweiten Schnittstelle (10B) weiterzugeben und Informationen in Zusammenhang mit dem Betrieb lokaler Anwendungen (4) zu nativen Anwendungen (2), und die zweite Schnittstelle angepasst ist, um Informationen, die von der ersten Schnittstelle (10A) stammen, zu lokalen Anwendungen (2) weiterzugeben.

3. System nach einem der Ansprüche 1 und 2, **dadurch gekennzeichnet, dass** die erste und zweite Schnittstelle (10A, 10B) angepasst sind, um die Informationen zwischen einer ersten Computersprache, die von den nativen Anwendungen (2) verwendet wird, und einer zweiten Computersprache, die von den Anwendungen (4, 6), die über eine Internet-Software ausführbar sind, umzuwandeln.

4. System nach einem der Ansprüche 1 bis 3, **dadurch gekennzeichnet, dass** es eine native Bekanntgabeanwendung (2D) umfasst, die angepasst ist, um periodisch einen entfernten Server abzufragen und die erhaltenen Informationen zu einer nativen Anwendung (2) und/oder einer lokalen Anwendung (4) über die zweite Schnittstelle (10B) zum Datenaustausch zu übertragen.

5. System nach einem der Ansprüche 1 bis 4, **dadurch gekennzeichnet, dass** es eine native Bekanntgabeanwendung (2D) umfasst, die angepasst ist, um periodisch Informationen in Zusammenhang mit dem Betrieb der nativen (2) und/oder lokalen (4) Anwendungen zu einem entfernten Server zu übertragen, und dass mindestens eine entfernte Anwendung (6) des Endgeräts angepasst ist, um diese Informationen des entfernten Servers zu erhalten.

6. Datenaustauschverfahren in einem Multimediaendgerät zwischen:
- nativen Anwendungen (2), die direkt von dem Endgerät ausführbar sind,
- Anwendungen, die durch eine Internet-Navigationssoftware (8) ausführbar sind und Folgendes umfassen:
- lokale Anwendungen (4), die heruntergeladen und lokal in dem Endgerät gespeichert werden, um offline ausführbar zu sein,
- sowie entfernte Anwendungen (6), die einschränkend bei Verbindung mit einer entfernten Ausstattung ausführbar sind,
**dadurch gekennzeichnet, dass** es Folgendes umfasst:
- eine Erfassung (24) des Betriebs einer entfernten Anwendung;
- eine Übertragung (26) von Informationen in Zusammenhang mit dem Betrieb der entfernten Anwendung zu einer ersten Datenaustauschschnittstelle (10A) von den lokalen Anwendungen und zu den nativen Anwendungen;
- eine Übertragung (26) dieser Informationen zu einer zweiten Datenaustauschschnittstelle (10B) von den nativen Anwendungen und zu den lokalen Anwendungen;
- eine Übertragung (28) dieser Informationen durch die zweite Schnittstelle zu einer lokalen Anwendung;
- eine Ausführung (30) der lokalen Anwendung mit Hilfe der Informationen;
- eine Übertragung (34) von Informationen in Zusammenhang mit dem Betrieb der lokalen Anwendung zu der ersten Schnittstelle, und
- eine Übertragung (36) der Informationen zu einer nativen Anwendung durch die erste Schnittstelle.

7. Verfahren nach Anspruch 6, **dadurch gekennzeichnet, dass** es außerdem ein Erfassen (24, 32) des Betriebs von Anwendungen umfasst, die über eine Internet-Navigationssoftware ausführbar sind, um zu der ersten Schnittstelle Informationen in Zusammenhang mit dem Betrieb entfernter Anwendungen und der Ausführung lokaler Anwendungen zu übertragen.

8. Verfahren nach einem der Ansprüche 6 und 7, **dadurch gekennzeichnet, dass** die Übertragungen von Informationen zwischen den nativen Anwendungen und den Anwendungen, die über eine Navigationssoftware ausführbar sind, Umwandlung zwischen einer ersten Computersprache, die von den nativen Anwendungen verwendet wird, und einer zweiten Computersprache, die von den Anwendungen, die über eine Navigationssoftware ausführbar sind, umfassen.

9. Verfahren nach einem der Ansprüche 6 bis 8, **dadurch gekennzeichnet, dass** es außerdem Folgendes umfasst:
- ein Senden durch eine native Anwendung (2D) einer Abfrageanfrage eines entfernten Servers;
- ein Erhalten von Informationen rückwendend, und
- eine Übertragung dieser Informationen zu einer nativen Anwendung (2) und/oder zu
- einer lokalen Anwendung (4) über die zweite Schnittstelle (10B).

10. Verfahren nach einem der Ansprüche 6 bis 9, **dadurch gekennzeichnet, dass** es außerdem Folgendes umfasst:
- eine Übertragung zu einem entfernten Server und durch eine native Anwendung (2D) von Informationen in Zusammenhang mit dem Betrieb der nativen und/oder lokalen Anwendungen, und
- ein Erhalten diese Informationen durch eine entfernte Anwendung (6).

11. Computerprogramm, das Anweisungen für das Umsetzen des Verfahrens nach einem der Ansprüche 6 bis 10, wenn dieses Programm von einem Prozessor ausgeführt wird, umfasst.

## Claims

1. System for exchanging data for a multimedia terminal, said terminal comprising:
- native applications (2), that can be executed directly by the terminal,
- applications that can be executed through internet browser software (8) and comprising:
- local applications (4) downloaded and stored locally in the terminal to be able to be executed offline,
- and remote applications (6) that can be executed only when connected with a remote equipment item,
**characterized in that** the system comprises:
- a module (18) for detecting the operation of an application (4, 6) that can be executed through internet browser software, in local mode for a local application (4), or in remote mode for a remote application (6),
- a first interface (10A) for exchanging data from the local applications and to the native applications, and
- a second interface (10B) for exchanging data from the native applications and to the local applications,
and **in that** said detection module and said first and second interfaces are adapted for:
- a transmission (26) of information relating to the operation of a remote application to the first interface (10A);
- a transmission (26) of this information to the second interface (10B);
- a transmission (28) of this information by said second interface to a local application;
- an execution (30) of the local application using said information;
- a transmission (34) of information relating to the operation of said local application to said first interface; and
- a transmission (36) of said information to a native application by said first interface.

2. System according to Claim 1, **characterized in that** the detection module (18) is adapted to relay information relating to the operation of applications that can be executed through internet browser software to said first interface (10A), said first interface is adapted to relay information relating to the operation of remote applications (6) to said second interface (10B) and information relating to the operation of local applications (4) to native applications (2) and said second interface is adapted to relay information originating from said first interface (10A) to local applications (2).

3. System according to either one of Claims 1 and 2, **characterized in that** said first and second interfaces (10A, 10B) are adapted to convert the information between a first computer language used by said native applications (2) and a second computer language used by said applications (4, 6) that can be executed through internet software.

4. System according to any one of Claims 1 to 3, **characterized in that** it comprises a native notification application (2D) adapted to periodically interrogate a remote server and transmit the information obtained to a native application (2) and/or to a local application (4) via said second interface (10B) for exchanging data.

5. System according to any one of Claims 1 to 4, **characterized in that** it comprises a native notification application (2D) adapted to periodically transmit information relating to the operation of the native (2) and/or local (4) applications to a remote server and **in that** at least one remote application (6) of the terminal is adapted to obtain this information from the remote server.

6. Method for exchanging data in a multimedia terminal between:
- native applications (2) that can be executed directly by the terminal,
- applications that can be executed through internet browser software (8) and comprising:
- local applications (4) downloaded and stored locally in the terminal to be able to be executed offline,
- and remote applications (6) that can be executed only when connected with a remote equipment item,
**characterized in that** it comprises:
- a detection (24) of the operation of a remote application;
- a transmission (26) of information relating to the operation of the remote application to a first interface (10A) for exchanging data from the local applications and to the native applications;
- a transmission (26) of this information to a second interface (10B) for exchanging data from the native applications and to the local applications;
- a transmission (28) of this information by said second interface to a local application;
- an execution (30) of the local application using said information;
- a transmission (34) of information relating to the operation of said local application to said first interface; and
- a transmission (36) of said information to a native application by said first interface.

7. Method according to Claim 6, **characterized in that** it also comprises a detection (24, 32) of the operation of applications that can be executed through internet browser software with a view to the transmission to said first interface of information relating to the operation of remote applications and to the execution of local applications.

8. Method according to either one of Claims 6 and 7, **characterized in that** said transmissions of information between the native applications and the applications that can be executed through browser software comprise conversions between a first computer language used by the native applications and a second computer language used by the applications that can be executed through browser software.

9. Method according to any one of Claims 6 to 8, **characterized in that** it also comprises:
- a transmission, by a native application (2D), of a request to interrogate a remote server;
- an obtaining of information in return; and
- a transmission of this information to a native application (2) and/or to
- a local application (4) via said second interface (10B).

10. Method according to any one of Claims 6 to 9, **characterized in that** it also comprises:
- a transmission, to a remote server and by a native application (2D), of information relating to the operation of the native and/or local applications; and
- an obtaining of this information by a remote application (6).

11. Computer program comprising instructions for implementing the method according to one of Claims 6 to 10, when this program is run by a processor.
